(19) Europäisches Patentamt
European Patent Office
Office européen des brevets

(11) Numéro de publication: **0 310 726 B1**

(12) # FASCICULE DE BREVET EUROPEEN

(45) Date de publication de fascicule du brevet: **27.12.91**

(51) Int. Cl.5: **B21D 22/26**, B21D 51/26

(21) Numéro de dépôt: **87402240.3**

(22) Date de dépôt: **08.10.87**

(54) **Procédé de fabrication de boîtes métalliques tronconiques et outillage pour la mise en oeuvre de ce procédé.**

(43) Date de publication de la demande:
**12.04.89 Bulletin 89/15**

(45) Mention de la délivrance du brevet:
**27.12.91 Bulletin 91/52**

(84) Etats contractants désignés:
**AT BE CH DE ES GB GR IT LI LU NL SE**

(56) Documents cités:
**FR-A- 2 340 151**
**GB-A- 2 096 930**
**US-A- 4 051 707**
**GB-A- 207 879**
**US-A- 3 302 441**
**US-A- 4 195 510**

(73) Titulaire: **CMB PACKAGING S.A.**
**65, avenue Edouard Vaillant**
**F-92100 Boulogne Billancourt(FR)**

(72) Inventeur: **Carpier, Gérard**
**9 rue des Myosotis**
**F-78650 Beynes(FR)**
Inventeur: **Boinne, Jacques**
**28 Avenue de Clichy**
**F-75018 Paris(FR)**

(74) Mandataire: **CABINET BONNET-THIRION**
**95 Boulevard Beaumarchais**
**F-75003 Paris(FR)**

**EP 0 310 726 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition dcit être formée par écrit et motivée. Elle n'est réputée formée qu'après paiement de la taxe d'opposition (art. 99(1) Convention sur le brevet européen).

Rank Xerox (UK) Business Services

## Description

L'invention se rapporte à un procédé de fabrication de boîtes métalliques tronconiques, par emboutissage et concerne plus particulièrement un tel procédé permettant, le cas échéant, d'utiliser des tôles de fer dites "double réduction". Une telle tôle est remarquable par une dureté et une rigidité accrues permettant, pour une résistance mécanique souhaitée de la boîte, d'utiliser une tôle de moindre épaisseur et donc, de produire ladite boîte à un moindre prix de revient. L'invention concerne également un outillage pour la mise en oeuvre de ce procédé.

Les emballages métalliques tronconiques sont de plus en plus appréciés des industriels utilisateurs comme des consommateurs. Leur principal avantage réside dans le fait que les corps de boîte peuvent être empilés et donc stockés dans un espace restreint entre leur fabrication et leur remplissage. L'emballage et le transport de tels corps de boîte ainsi empilés sont donc beaucoup moins coûteux. De même, le consommateur, qui utilise un grand nombre de tels emballages, peut apprécier de pouvoir les empiler après usage, avant de les jeter. De plus, dans le cas où les boîtes sont remplies d'un produit pâteux, le démoulage est facilité par la forme tronconique.

On connaît plusieurs procédés de fabrication de tels corps de boîte tronconiques.

Le plus classique consiste à utiliser un poinçon et une matrice tronconiques, de formes complémentaires. La tôle est pressée par un "serre flan" annulaire en regard de l'ouverture de la matrice et le poinçon est engagé dans cette dernière en déformant la tôle jusqu'à ce qu'elle soit serrée, sur ses deux faces tronconiques, entre le poinçon et la matrice. Le procédé n'est possible qu'avec de la tôle traditionnelle, c'est-à-dire dont la limite élastique est inférieure à $400 N/mm^2$. Ce procédé ne permet qu'une profondeur d'emboutissage limitée et se traduit par la formation de plis, parallèlement à une génératrice de la partie tronconique. Ces plis, qui peuvent être plus ou moins écrasés en fin d'opération, nuisent à l'esthétique de la boîte et sont mal acceptés par la clientèle. Ils risquent d'endommager le décor extérieur du corps de boîte, ainsi que le revêtement intérieur habituellement appliqués sur le flan, avant emboutissage.

Pour obtenir des profondeurs plus importantes, il est connu de procéder en plusieurs phases, par exemple sur une presse-transfert, les premières phases consistant à réaliser une ébauche étagée formée de portions cylindriques successives de diamètres différents. La dernière phase consiste en un emboutissage tronconique du genre indiqué ci-dessus. Les mêmes défauts subsistent et sont même accentués, à savoir la formation de plis et l'impossibilité d'utiliser de la tôle dite "double réduction".

Un autre procédé connu consiste en un emboutissage avec une matrice cylindrique et un poinçon tronconique, le métal venant progressivement épouser la forme de l'extrémité tronconique du poinçon. Ce procédé implique un serrage important du flan entre la matrice et le serre-flan pour que le métal vienne effectivement épouser la forme du poinçon. Il en résulte donc un fort risque d'endommager les revêtements intérieurs et extérieurs appliqués préalablement sur le flan. Autrement dit, on est obligé d'utiliser des revêtements de très haute qualité, très résistants et relativement coûteux. D'autre part, ce procédé est impraticable avec une tôle dite "double réduction".

Un procédé dérivé du précédent consiste à réaliser d'abord une ébauche cylindrique classique avant d'appliquer la phase d'emboutissage avec matrice cylindrique et poinçon tronconique. Pour des corps de boîte dépassant une certaine profondeur, on procède ensuite à des réemboutissages entre matrice(s) et poinçon(s) conique(s). Ce dernier procédé, le plus récent, réalisant une certaine combinaison de phases opératoires connues individuellement, permet d'obtenir un meilleur état de surface (pas de pli) avec des tôles traditionnelles. Il reste impraticable avec des tôles dites "double réduction" et l'un de ses plus graves inconvénients est la forte pression de serre-flan requise, qui rend sa mise en oeuvre délicate avec des flans ou ébauches prédécorés.

Le document GB-A-2 096 930 décrit un outillage selon le préambule de la revendication 5 et un procédé selon le préambule de la revendication 1 pour l'emboutissage d'une ébauche cylindrique avec un poinçon cylindrique et une matrice tronconique, pour obtenir un corps de boîte tronconique.

L'invention concerne un nouveau procédé d'emboutissage permettant de former des corps de boîte tronconiques présentant un état de surface remarquable (sans pli) avec une pression de serre-flan modérée ne détériorant pas une éventuelle surface décorée ou vernie, appliquée préalablement à l'emboutissage, sur les flans.

On entend par pression de serre-flan modérée, celle habituellement utilisée pour des emboutis et des réemboutis cylindriques, par exemple:

- 15 à 20 bars pour une première passe ou un embouti réalisé en une seule passe
- 40 à 60 bars pour les passes de réemboutissage.

Un autre but de l'invention est de proposer un procédé d'emboutissage permettant de former des corps de boîte tronconiques à partir de flans de tôle dite "double réduction", d'épaisseur plus faible, toutes choses égales par ailleurs.

Une tôle "double réduction", connue en soi, se

définit comme ayant subi une phase d'écrouissage supplémentaire après recuit, augmentant sa limite de déformation élastique (supérieure à $480N/mm^2$) avec la particularité de présenter une limite de rupture assez proche de ladite limite de déformation élastique, d'où des difficultés particulières pour transformer une telle tôle, en particulier par emboutissage.

Le concept de l'invention résulte de l'observation que, dans une phase d'emboutissage du genre mentionné ci-dessus avec poinçon conique et matrice cylindrique, une pression de serre-flan insuffisante se traduisait par le fait que la tôle se conformait à la matrice et non pas au poinçon.

Dans cet esprit, l'invention concerne essentiellement un procédé de fabrication d'un corps de boîte tronconique par emboutissages successifs, du type consistant à effectuer au moins une phase d'emboutissage d'une ébauche en appliquant ladite ébauche en regard de l'ouverture d'une matrice essentiellement tronconique et en faisant pénétrer un poinçon essentiellement cylindrique dans ladite matrice, caractérisé en ce que chaque phase d'emboutissage consiste à appliquer une pression de serrage prédéterminée sur une zone annulaire de ladite ébauche ou d'un flan, autour de l'ouverture de la matrice et à l'extérieur de celle-ci, en ce que ladite pression de serrage prédéterminée est suffisamment faible pour que le métal épouse sensiblement la paroi essentiellement tronconique de ladite matrice sur au moins une partie de la profondeur d'emboutissage et en ce que chaque phase d'emboutissage est effectuée à partir d'un poinçon de diamètre donné, sensiblement égal au diamètre du fond désiré dudit corps de boîte et en ce que, au cours des emboutissages successifs, le diamètre d'ouverture de la matrice est augmenté.

L'invention concerne également un outillage pour la fabrication par emboutissage d'un corps de boîte métallique tronconique, pour la mise en oeuvre du procédé défini ci-dessus, du type comportant au moins un ensemble poinçon-matrice, un tel poinçon essentiellement cylindrique étant susceptible d'être engagé à force dans une telle matrice essentiellement tronconique à travers une cuverture de celle-ci, pour déformer une ébauche de tôle et un moyen de serrage coopérant avec cet ensemble poinçon-matrice, caractérisé en ce qu'il comporte plusieurs ensembles poinçon-matrice précités et en ce que chaque moyen de serrage associé est à pression prédéterminée et comporte une bague annulaire venant s'appliquer autour de l'ouverture de ladite matrice et à l'extérieur de celle-ci, en ce que le poinçon de chaque ensemble poinçon-matrice a un diamètre prédéterminé unique, sensiblement égal au diamètre du fond désiré dudit corps de boîte tandis que les matrices successives ont des ouvertures de diamètres croissants.

Les différents ensembles poinçon-matrice sont installés, par exemple, sur une presse-transfert.

L'invention sera mieux comprise et d'autres avantages de celle-ci apparaîtront plus clairement à la lumière de la description qui va suivre, illustrant un exemple particulier d'outillage mettant en oeuvre le procédé conforme à l'invention, donnée uniquement à titre d'exemple et faite en référence aux dessins annexés dans lesquels:

- les figures 1 à 5 sont des vues schématiques illustrant différentes étapes d'un procédé de formation d'un corps de boîte, par emboutissage;
- la figure 6 est une vue partielle et à plus grande échelle d'un ensemble poinçon-matrice, tel que par exemple celui de la figure 3, sur lequel sont définis certains paramètres à prendre en considération pour la mise en oeuvre du procédé; et
- la figure 7 est une vue partielle et à plus grande échelle du dernier ensemble poinçon-matrice, modifié selon une variante possible.

En se reportant aux dessins, on a représenté aux figures 1 à 5 les principales étapes d'un procédé de fabrication d'un corps de boîte 11 (figure 5) par emboutissages successifs d'une ébauche 12 (figure 2) originellement en forme de cuvette sensiblement cylindrique, elle-même obtenue à partir d'un flan de tôle 13 en forme de disque (figure 1). L'ébauche 12, telle que visible sur la figure 2, est obtenue par un premier emboutissage du flan 13, sur une profondeur relativement faible, au moyen d'un poinçon 20 et d'une matrice 21, de formes complémentaires, approximativement cylindriques. Cette phase d'emboutissage, est classique et ne fait pas partie de l'invention. Le rapport d'emboutissage (rapport entre la profondeur d'emboutissage et le diamètre de l'ébauche) est ici suffisamment faible pour que la forme sensiblement cylindrique représentée, puisse être obtenue en une seule phase de poinçonnage, même avec de la tôle "double réduction".

Selon un mode de réalisation de l'invention (figures 3 à 5) on réalise plusieurs emboutissages successifs (trois selon l'exemple) de l'ébauche 12, qui devient successivement 12a, 12b, 11, en la soumettant, chaque fois, à l'action d'un ensemble poinçon-matrice 30-31, 40-41 et 50-51, différents. Chaque ensemble poinçon-matrice est remarquable par le fait que le diamètre de l'ouverture de la matrice Da, Db, Dc augmente d'une phase à l'autre tandis que le diamètre d du poinçon correspondant reste invariable. La conicité c de la matrice reste constante d'un ensemble à l'autre.

Dans l'exemple spécifiquement décrit, on part d'une ébauche 12, sensiblement cylindrique, de 45mm de hauteur et de 92mm de diamètre et, pour

ce qui concerne les phases d'emboutissage suivantes conformes à l'invention, on a:

c = 2°

d = 68,60mm

Da = 70,20mm

Db = 71,80mm

Dc = 73,40mm

Le diamètre d est sensiblement égal au diamètre final du fond du corps de boîte, pratiquement achevé en 11. Pour chaque ensemble poinçon-matrice, l'ébauche est appliquée en regard de l'ouverture de la matrice considérée avec une pression de serrage prédéterminée, appliquée par un moyen de serrage 32, 42, 52, correspondant, sous forme d'une bague annulaire cylindrique. La pression de serrage est relativement modérée pour que le métal épouse sensiblement la paroi interne de la matrice sur la plus grande partie de la profondeur d'emboutissage et non plus celle du poinçon, comme c'était le cas dans la technique antérieure à poinçon conique. On est ainsi amené, dans la pratique, à mettre en oeuvre des pressions de serrage usuelles pour l'emboutissage, et le réemboutissage de corps cylindriques.

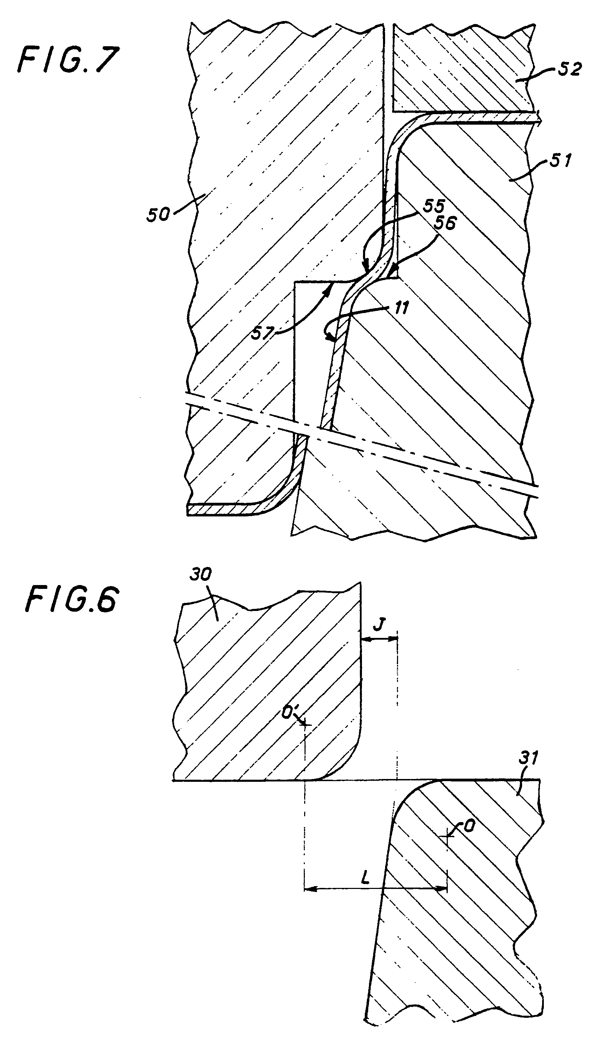

En se reportant plus particulièrement à la figure 6, on va maintenant expliciter certaines caractéristiques ou modes opératoires du procédé, permettant notamment de travailler des flans ou ébauches de tôle dites "double réduction" tout en évitant la formation de plis inesthétiques, selon les génératrices de la portion tronconique dudit corps de boîte.

Il convient de remarquer que l'ouverture de la matrice, tout comme l'extrémité du poinçon, ne présente pas d'arête vive mais, au contraire, un bord circulaire arrondi ayant en coupe radiale, un certain rayon de courbure. Dans ces conditions, on peut définir deux paramètres J et L appelés ici respectivement "jeu annulaire" et "distance radiale libre". Le "jeu annulaire" J se définit comme étant la demi-différence entre le diamètre de l'ouverture de la matrice (en considérant cette dernière comme étant la section de la surface tronconique prolongée de ladite matrice avec le plan de la face d'entrée de cette matrice) et le diamètre du poinçon, en dehors de sa zone d'extrémité arrondie. La "distance radiale libre" L se définit comme étant la distance entre les centres de courbure 0,0', en section radiale, des bords de l'ouverture de la matrice et du poinçon, en projection sur un plan perpendiculaire à l'axe commun de la matrice et du poinçon. La "distance radiale libre" est donc celle sur laquelle le métal n'est pas maintenu au début de sa déformation. Ces deux paramètres sont clairement repérés sur la figure 6.

On a déterminé que, pour obtenir de bonnes conditions d'emboutissage, même avec de la tôle "double réduction", le "jeu annulaire" J et la "distance radiale libre" L devaient augmenter au cours des phases d'emboutissage successives. L'homme du métier peut réaliser de semblables conditions, notamment en choisissant judicieusement les jeux annulaires, les rayons de courbure du bord de l'ouverture de la matrice d'une part, et du bord de l'extrémité du poinçon d'autre part, cela pour un matériau donné.

Par ailleurs, pour chaque ensemble poinçon-matrice, il est possible de définir une profondeur maximum d'emboutissage, à savoir:

$$h_{max} = \frac{J - e}{tgc} + e$$

où c représente la conicité de la matrice (voir figure 3) et e est l'épaisseur de la tôle. La profondeur maximum d'emboutissage $h_{max}$ est donc spécifique de chaque ensemble poinçon-matrice et dépend essentiellement du jeu J.

Pour une phase d'emboutissage donnée (figures 3 à 5), la profondeur d'emboutissage h réelle est inférieure à $h_{max}$ mais le rapport $h/h_{max}$ augmente entre deux phases d'emboutissage consécutives. Ainsi, dans l'exemple illustré par les figures 3 à 5, ce rapport augmente successivement de la façon suivante:

60% 80% 98%

La figure 7 illustre par exemple l'ensemble poinçon-matrice de la figure 5 (de la dernière phase d'emboutissage) modifiée pour provoquer un élargissement 55 dans une portion annulaire supérieure du corps de boîte 11. Cet élargissement forme une sorte d'épaulement grâce auquel des corps de boîte identiques peuvent être empilés sans risque de se bloquer les uns dans les autres. Pour ce faire, la matrice 51 comporte une zone annulaire creusée 56 tandis que le poinçon comporte une zone annulaire élargie 57. Les zones annulaires 56 et 57 sont positionnées de façon à venir en regard l'une de l'autre, en fin de course du poinçon 50 et leurs formes et dimensions sont telles qu'elles enserrent et déforment le métal de façon à créer l'élargissement 55.

Après la dernière phase d'emboutissage, le corps de boîte 11 subit un détourage de son bord supérieur; cette opération, classique, n'a pas été représentée. L'élargissement 55, qui a l'avantage d'être obtenu en même temps que l'emboutissage, peut être remplacé par un bourrelet circulaire, obtenu par une opération de moletage interne spécifique.

D'autre part, il a été précisé que le procédé est mis en oeuvre avec une matrice essentiellement tronconique. Cela signifie notamment que le procédé peut être mis en oeuvre pour obtenir toute

forme de corps de boîte comportant des secteurs tronconiques, par exemple des boîtes troncopyramidales ou des boîtes tronconiques de section, circulaire elliptique ou ovale, à l'aide de matrices de formes correspondantes.

De même, le procédé défini ci-dessus peut être appliqué à des métaux de limite élastique inférieure à celle de la tôle "double réduction".

## Revendications

1. Procédé de fabrication d'un corps de boîte métallique tronconique par emboutissages successifs, du type consistant à effectuer au moins une phase d'emboutissage d'une ébauche (12) en appliquant ladite ébauche en regard de l'ouverture d'une matrice (31, 41, 51) essentiellement tronconique et en faisant pénétrer un poinçon (30, 40, 50) essentiellement cylindrique dans ladite matrice, caractérisé en ce que chaque phase d'emboutissage consiste à appliquer une pression de serrage prédéterminée sur une zone annulaire de ladite ébauche ou d'un flan, autour de l'ouverture de la matrice et à l'extérieur de celle-ci, en ce que ladite pression de serrage prédéterminée est suffisamment faible pour que le métal épouse sensiblement la paroi essentiellement tronconique de ladite matrice sur au moins une partie de la profondeur d'emboutissage et en ce que chaque phase d'emboutissage est effectuée à partir d'un poinçon de diamètre (d) donné, sensiblement égal au diamètre du fond désiré dudit corps de boîte et en ce que, au cours des emboutissages successifs, le diamètre d'ouverture de la matrice est augmenté.

2. Procédé selon la revendication 1, dans lequel une profondeur maximum d'emboutissage (h max) est spécifique de chaque phase d'emboutissage, caractérisé en ce que le rapport entre la profondeur d'emboutissage réelle (h) et ladite profondeur maximum d'emboutissage (h max) augmente entre deux phases d'emboutissage successives.

3. Procédé selon la revendication 1 ou 2, caractérisé en ce qu'il consiste à élargir une région annulaire de la paroi tronconique dudit corps de boîte, au voisinage de l'ouverture de celui-ci, en déformant le métal entre deux zones (56, 57) de formes complémentaires définies sur la dernière matrice et sur le dernier poinçon.

4. Procédé selon l'une des revendications précédentes, caractérisé en ce qu'il est mis en oeuvre avec de la tôle dite "double réduction".

5. Outillage pour la fabrication par emboutissage d'un corps de boîte sensiblement tronconique, pour la mise en oeuvre du procédé selon l'une des revendications précédentes, du type comportant au moins un ensemble poinçon-matrice (30, 31-40, 41-50, 51), un tel poinçon (30; 40; 50) essentiellement cylindrique étant susceptible d'être engagé à force dans une telle matrice (31; 41; 51) essentiellement tronconique à travers une ouverture de celle-ci, pour déformer une ébauche (12) de tôle et un moyen de serrage (32, 42, 52) coopérant avec cet ensemble poinçon-matrice, caractérisé en ce qu'il comporte plusieurs ensembles poinçon-matrice (30, 31-40, 41-50, 51) précités et en ce que chaque moyen de serrage associé est à pression prédéterminée et comporte une bague annulaire (32, 42, 52) venant s'appliquer autour de l'ouverture de ladite matrice et à l'extérieur de celle-ci, en ce que le poinçon de chaque ensemble poinçon-matrice a un diamètre prédéterminé unique, sensiblement égal au diamètre du fond désiré dudit corps de boîte tandis que les matrices successives ont des ouvertures de diamètres croissants.

6. Outillage selon la revendication 5, caractérisé en ce que la dernière matrice et le dernier poinçon comportent respectivement une zone annulaire creusée (56) et une zone annulaire élargie (57), positionnées de façon à venir en regard l'une de l'autre en fin de course du poinçon, les formes et dimensions de ces deux zones annulaires étant propres à enserrer le métal sur une portion annulaire située au voisinage de l'ouverture dudit corps et à le déformer en provoquant un élargissement de cette portion.

## Claims

1. A method of making a frusto-conical metal can body in successive drawing steps, of the kind that consists in performing at least one step of drawing a cup (12), locating the said cup in line with the aperture of a substantially frusto-conical die (31, 41, 51), and causing a substantially cylindrical ram (30, 40, 50) to penetrate into the said die, characterised in that each drawing step comprises applying a predetermined clamping pressure to an annular zone of the said cup or of a flat blank, around the aperture of the die and on the exterior of the latter, in that the said predetermined clamping pressure is sufficiently low for the metal substantially to hug the substantially frusto-conical wall of the said die over at least part of the drawing depth, in that each drawing

step is performed with a ram having a given diameter (d) which is substantially equal to the desired base diameter of the said can body, and in that the die aperture diameter is increased over successive drawing steps.

2. A method according to Claim 1, in which each drawing step has a specific maximum drawing depth (h max), characterised in that the ratio between the actual drawing depth (h) and the said maximum drawing depth (h max) is increased between two successive drawing steps.

3. A method according to Claim 1 or Claim 2, characterised in that it comprises widening an annular region of the frusto-conical wall of the said can body in the vicinity of the opening of the latter, by deforming the metal between two zones (56, 57) of complementary shapes, defined on the final die and on the final ram.

4. A method according to any one of the preceding Claims, characterised in that it is performed using plate of the double reduced kind.

5. Apparatus for making a substantially frusto-conical can body by a method of drawing in accordance with one of the preceding Claims, being of the kind comprising at least one set of tooling consisting of a ram and a die (30, 31 to 40, 41 to 50, 51), with a substantially cylindrical said ram (30; 40; 50) being adapted to be forcibly engaged in a substantially frusto-conical said die (31; 41; 51) via an aperture in the latter, whereby to deform a sheet metal cup (12), and a clamping means (32, 42, 52) cooperating with the said tooling set, characterised in that it includes a plurality of said tooling sets (30, 31 to 40, 41 to 50, 51), and in that each associated clamping means is arranged to exert a predetermined pressure and comprises an annular ring (32, 42, 52), which is applied around the aperture of the said die and on the exterior of the latter, and in that the ram of each said tooling set has a predetermined unique diameter which is substantially equal to the desired base diameter of the said can body, while the successive dies have apertures of increasing diameters.

6. Apparatus according to Claim 5, characterised in that the final die and the final ram respectively include a reduced annular zone (56) and a widened annular zone (57), so positioned that they are aligned with each other at the end of the travel of the ram, the shapes and dimensions of these two annular zones being adapted to grip the metal in an annular portion in the vicinity of the opening of the said body, and to deform it by causing the said portion to be widened.

**Patentansprüche**

1. Verfahren zum Herstellen eines kegelstumpfförmigen Dosenkörpers aus Metall durch aufeinanderfolgende Tiefziehvorgänge in der Weise, daß man in wenigstens einer Phase einen Tiefziehvorformling (12) erzeugt, diesen in die im wesentlichen kegelstumpfförmige Öffnung einer Matrize (31; 41; 51) einbringt und einen im wesentlichen zylindrischen Stempel (30; 40; 50) in die genannte Matrize eindringen läßt, dadurch **gekennzeichnet,** daß jede Tiefziehphase darin besteht, daß man einen vorbestimmten Einspannoder Klemmdruck auf eine ringförmige Zone des Vorformlinges oder des Zuschnittes aufbringt, und zwar im Bereich um die Öffnung der Matrize und außerhalb derselben, daß der genannte vorbestimmte Einspanndruck ausreichend schwach gehalten wird, so daß das Metall fühlbar die Form der im wesentlichen kegelstumpfförmigen Wandung der Matrize auf wenigstens einem Teil der Tiefe des Zievorganges annimmt, daß jede Tiefziehphase mit einem Stempel mit einem vorgegebenen Durchmesser (d) ausgeführt wird, der ziemlich genau dem Durchmesser des gewünschten Bodens des Dosenkörpers entspricht, und daß im Laufe der aufeinanderfolgenden Tiefziehphasen der Öffnungsdurchmesser der Matrize vergrößert wird.

2. Verfahren nach Anspruch 1, bei dem in jeder Tiefziehphase eine maximale Tiefe (hmax) des Ziehvorganges spezifiziert wird, dadurch **gekennzeichnet,** daß das Verhältnis zwischen der reellen Tiefe (h) des Tiefziehvorganges und der genannten maximalen Ziehtiefe (hmax) zwischen zwei aufeinanderfolgenden Tiefziehphasen vergrößert wird.

3. Verfahren nach Anspruch 1 oder 2, dadurch **gekennzeichnet,** daß es darin besteht, daß ein ringförmiger Bereich der kegelstumpfförmigen Wand des genannten Dosenkörpers, und zwar in der Nähe seiner Öffnung, erweitert wird, indem man das Metall zwischen zwei Zonen (56,57) von komplimentärer Ausgestaltung umformt, die von der letzten Matrize und von dem letzten Stempel definiert werden.

4. Verfahren nach einem der voranstehenden Ansprüche, dadurch **gekennzeichnet,** daß es an doppelt reduziertem Blech angewendet wird.

**5.** Vorrichtung zum Herstellen eines im wesentlichen kegelstumpfförmigen Dosenkörpers durch Tiefziehen zum Ausführen des Verfahrens nach einem der voranstehenden Ansprüche, welche wenigstens eine Anordnung aus Stempel und Matrize (30,31 - 40,41 - 50,51) aufweist, wobei ein solcher Stempel (30;40;50) im wesentlichen zylindrisch und geeignet ist, mit Kraft durch eine Öffnung einer solchen im wesentlichen kegelstumpfförmigen Matrize (31;41;51) in diese Matrize einzugreifen, um einen Vorformling (12) aus Blech umzuformen, und bei der Spann- oder Klemm-Mittel (32;42;52) vorgesehen sind, die mit der Anordnung aus Stempel und Matrize zusammenwirken, dadurch **gekennzeichnet,** daß die Vorrichtung mehrere solche vorerwähnten Anordnungen aus Stempel und Matrize (30,31 - 40,41 - 50,51) aufweist, und daß jedes diesen zugeordneten Spannmittel von vorbestimmmtem Druck ist und einen ringförmigen Teil (32;42;52) umfaßt, der im Bereich um die Öffnung der genannten Matrize und außerhalb dieser zur Anwendung kommt, und daß der Stempel jeder Anordnung aus Stempel und Matrize einen besonderen, vorbestimmten Durchmesser aufweist, der im wesentlichen gleich dem gewünschten Durchmesser des Bodens des Dosenkörpers ist, während die nacheinander wirksamen Matrizen Öffnungen mit zunehmendem Durchmesser aufweisen.

**6.** Vorrichtung nach Anspruch 5, dadurch **gekennzeichnet,** daß die letzte Matrize und der letzte Stempel jeweils eine ausgenommene Ringzone (56) und eine erweiterte Ringzone (57) aufweisen, die so angeordnet sind, daß sie am Ende des Weges des Stempels in einen gegenseitigen Abstand gelangen, wobei Form und Abmessung der beiden ringförmigen Zonen so sind, daß sie das Material auf einem ringförmigen Abschnitt zusammenpressen, der der Öffnung des genannten Körpers benachbart ist und diesen Bereich unter Erzeugen einer Erweiterung dieses Abschnittes umformen.

FIG. 1

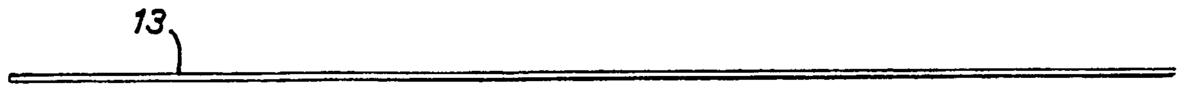


FIG. 2

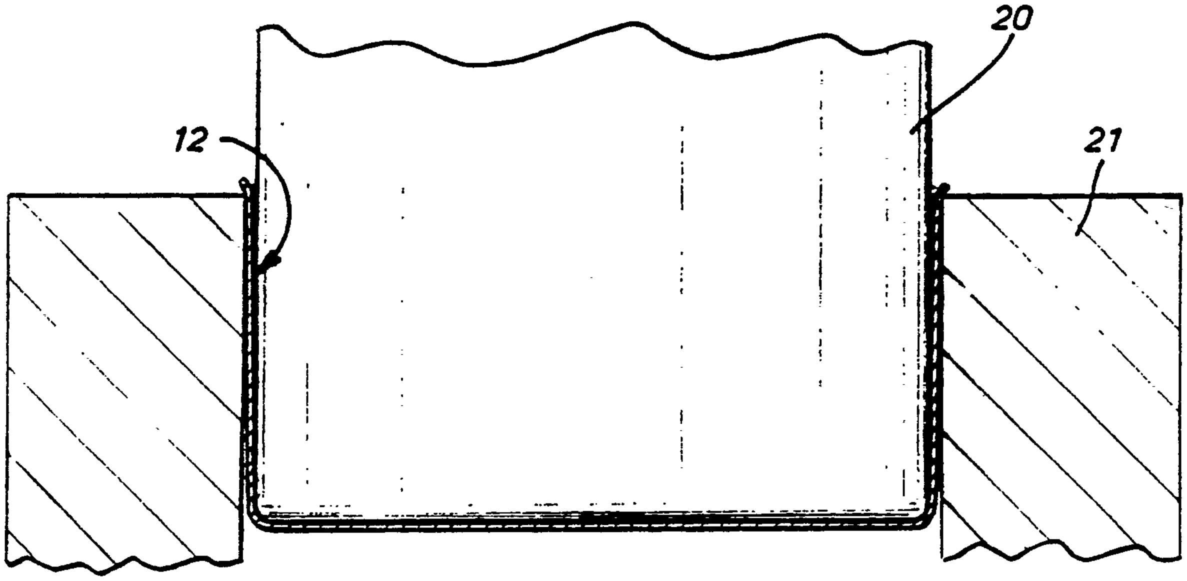


FIG. 3

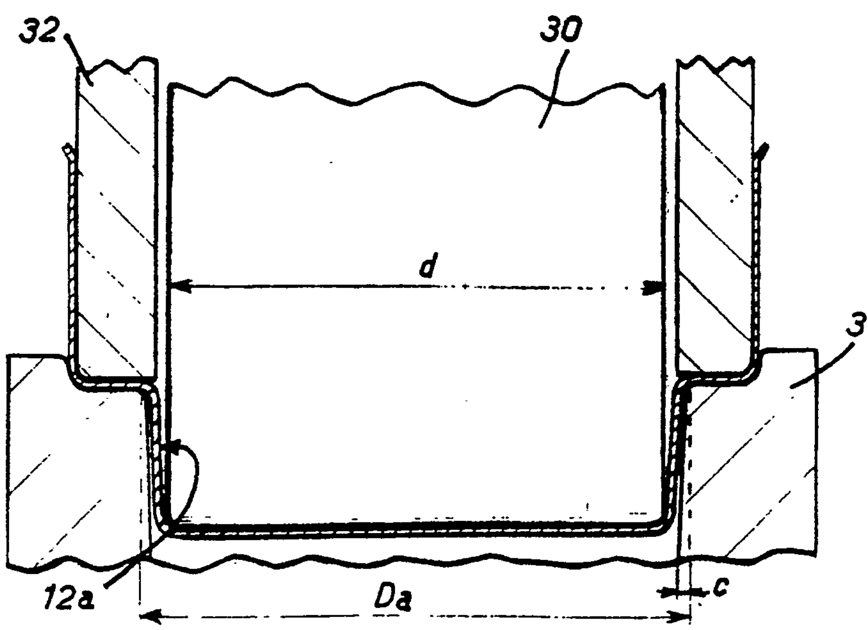

FIG. 4

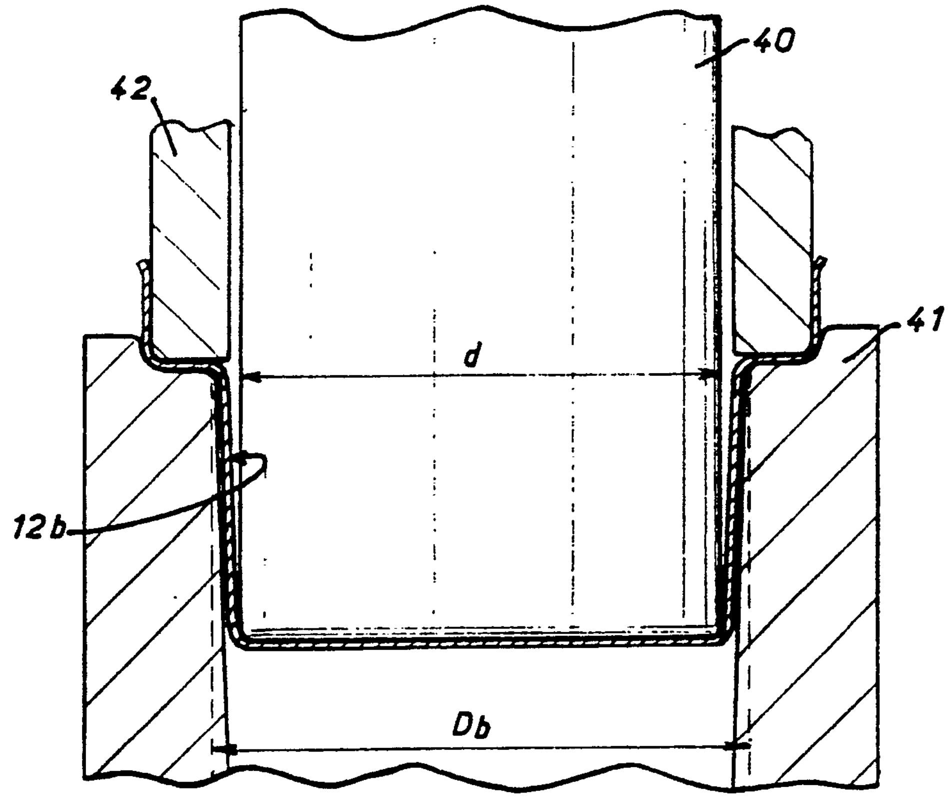


FIG. 5

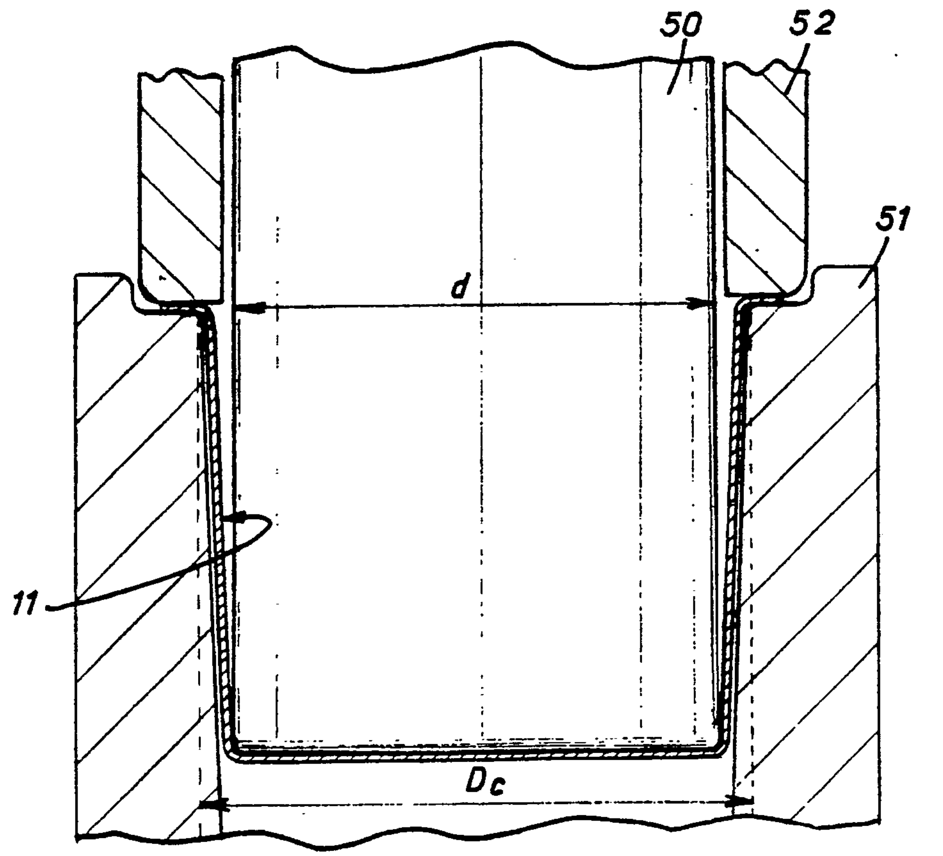

FIG.7

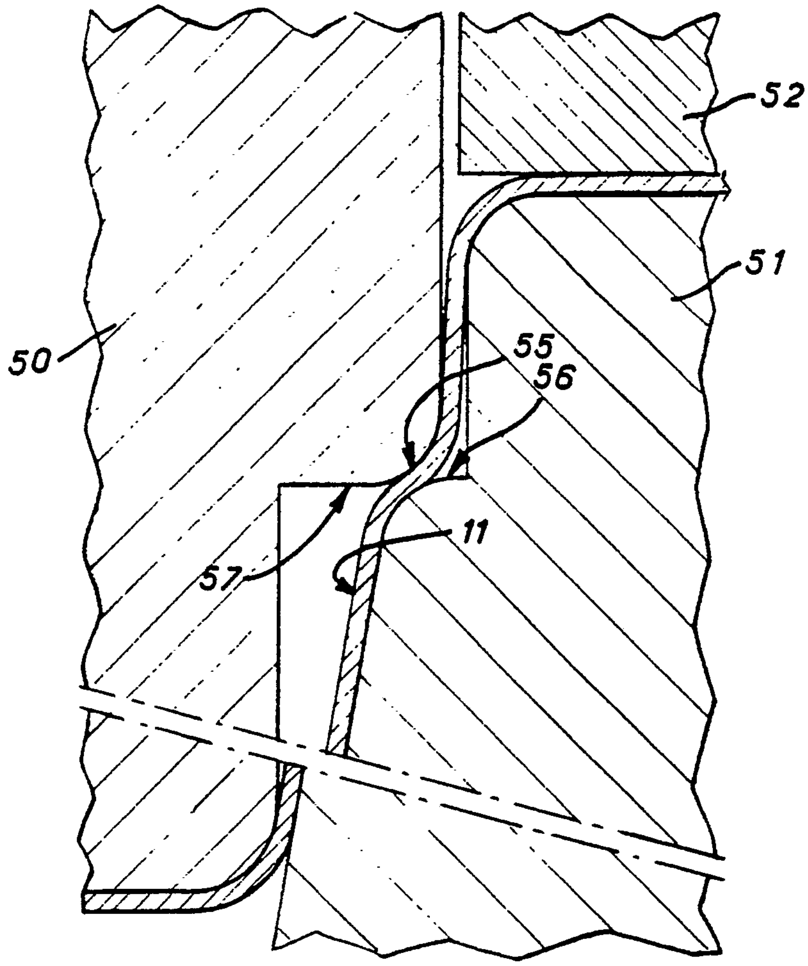


FIG.6